# FASCICULE DE BREVET EUROPEEN

(11) **EP 1 705 389 B1**
(45) Date de publication et mention de la délivrance du brevet: **06.03.2013**
(21) Numéro de dépôt: 06290402.4
(22) Date de dépôt: 13.03.2006
(51) Int. Cl.: F16B 31/00, F42B 3/00

(54) **Dispositif d'assemblage à rupture pyrotechnique**
Montagevorrichtung mit pyrotechnischem Sprengbruchmittel
Assembly device comprising pyrotechnical rupture means

(30) Priorité: 21.03.2005 FR 0502769
(43) Date de publication de la demande: 27.09.2006
(73) Titulaire: DASSAULT AVIATION, F-75008 Paris (FR)
(72) Inventeur: Martin, Bernard, 92370 Chaville (FR)
(74) Mandataire: Gaillarde, Frédéric F. Ch.

(56) Documents cités:
- US-A- 2 653 504
- US-A- 2 883 910
- US-A- 3 119 302
- US-A- 3 517 583

## Description

La présente invention est relative à un dispositif d'assemblage à rupture pyrotechnique conçu pour assembler temporairement au moins deux parties mécaniques. Plus particulièrement, l'invention est relative à un tel dispositif comprenant une tige présentant un axe et dimensionnée pour traverser les parties mécaniques suivant cet axe, des moyens coopérant avec la tige pour contraindre axialement ces parties entre les extrémités de la tige, au moins une gorge annulaire frangible formée sur la tige et des moyens pyrotechniques pour briser sélectivement la tige au niveau de cette gorge et libérer ainsi les parties mécaniques de leur assemblage.

Les dispositifs de ce type, couramment appelés " boulons explosifs ", libèrent les parties mécaniques de leur assemblage par l'explosion d'une charge pyrotechnique intégrée au boulon. Ils sont avantageusement de structure plus simple que certains dispositifs concurrents dans lesquels la libération des parties mécaniques s'opère par déverrouillage ou cisaillage d'une tige, par exemple.

Cependant, l'explosion d'un tel boulon disperse des débris des matériaux qui le constituent et des gaz chauds. Ces débris et gaz peuvent polluer l'environnement du boulon. C'est notamment le cas en ambiance spatiale, où les débris et gaz précités peuvent endommager la structure et/ ou perturber le fonctionnement d'appareils fragiles montés sur le satellite, tels que des systèmes optiques ou des panneaux solaires, par exemple.

Le document US 3 530 759 décrit un dispositif d'assemblage à rupture pyrotechnique pour assembler temporairement au moins deux parties mécaniques.

La présente invention a précisément pour but de fournir un dispositif d'assemblage à rupture pyrotechnique qui ne présente pas cet inconvénient.

La présente invention a aussi pour but de fournir un tel dispositif à niveau de choc atténué au moment de la rupture.

La présente invention a encore pour but de fournir un tel dispositif à rupture sécurisée.

On atteint ces buts de l'invention, ainsi que d'autres qui apparaîtront à la lecture de la description qui va suivre, avec un dispositif du type décrit en revendication 1.

Comme on le verra plus loin en détail, la conservation de l'unité et de l'étanchéité de la capsule après l'explosion de la charge empêche la dispersion de gaz ou de débris polluants dans l'environnement.

Selon d'autres caractéristiques de la présente invention:
- la capsule est réalisée en un métal déformable,
- le dispositif comprend un corps de forme généralement annulaire conçu pour être reçu dans le logement axial , la capsule débordant d'une extrémité du corps alors que des moyens d'initiation de l'explosion de la charge sont montés sur l'autre extrémité du corps,
- la gorge est disposée sur la tige sensiblement en regard de l'extrémité distale de la capsule,
- le logement axial présente une partie de paroi annulaire épaissie enserrant la capsule au niveau de la partie de celle-ci qui contient la charge,
- la partie de paroi épaissie présente une dimension axiale de l'ordre du diamètre de la charge,
- le logement axial présente une partie de paroi annulaire plus écartée du fond du logement que la partie épaissie, la partie plus écartée étant dimensionnée pour subir une déformation plastique lors de l'explosion de la charge, la tige se coupant alors au niveau de la gorge sous l'effet de contraintes de cisaillement concentrées à ce niveau,
- la gorge est située à proximité du fond du logement axial et l'extrémité distale de la capsule se gonfle lors de l'explosion de la charge et peut venir porter alors contre le fond du logement axial pour réaliser des fonctions supplémentaires,
- le dispositif comprend des moyens de retenue, sur l'une ou l'autre des parties mécaniques, des pièces du dispositif séparées par l'explosion de la charge.

D'autres caractéristiques et avantages de la présente invention apparaîtront à la lecture de la description qui va suivre et à l'examen du dessin annexé dans lequel :
- les figures 1 et 2 représentent, en vue cavalière et en coupe axiale, un premier mode de réalisation du dispositif suivant l'invention, avant et après l'explosion de la charge, respectivement, et
- les figures 3 et 4 sont des vues analogues à celles des figures 1 et 2, d'un deuxième mode de réalisation du dispositif suivant l'invention, à rupture sécurisée par redondance.

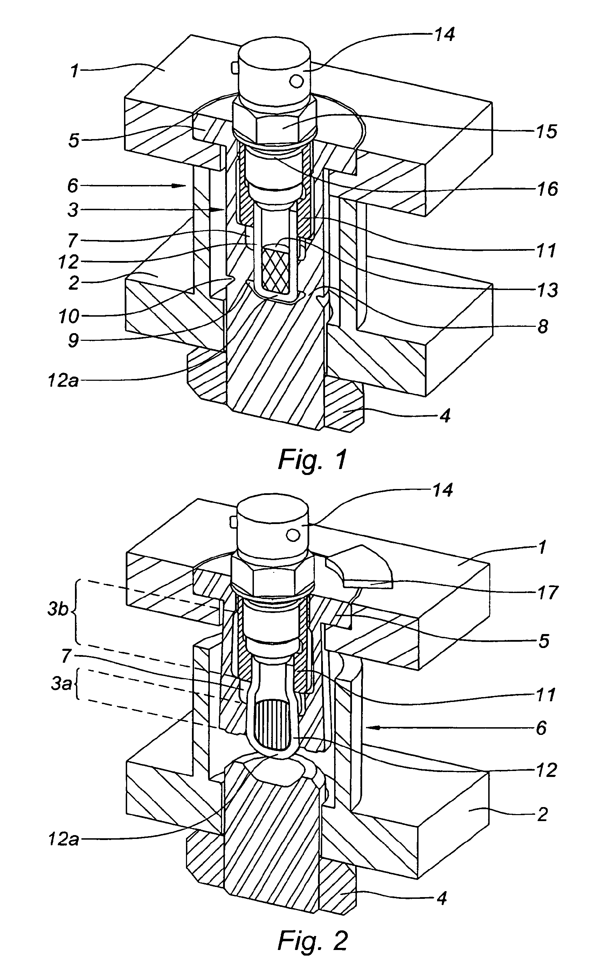

On se réfère à la figure 1 du dessin annexé où il apparaît que le dispositif représenté sert à assembler temporairement des parties mécaniques 1 et 2. Ces parties mécaniques peuvent elles-mêmes être solidaires d'ensembles plus complexes temporairement assemblés, comme un satellite artificiel et ses moyens de support, respectivement, ainsi qu'évoqué ci-dessus à titre illustratif et non limitatif seulement.

Les parties 1 et 2, généralement planes et parallèles, sont traversées par une tige 3 d'axe perpendiculaire aux faces en regard de ces parties et de section annulaire, circulaire dans le mode de réalisation représenté. Les parties 1 et 2 sont assemblées par un écrou 4 en appui contre la partie 2 et vissé sur une extrémité filetée correspondante de la tige 3, et par un épaulement circulaire 5 débordant radialement de l'autre extrémité de la tige 3, dans un logement complémentaire creusé dans la partie 1.

Les parties 1 et 2 pourraient être serrées l'une contre l'autre, au niveau de leurs faces planes en regard, par la mise en tension de la tige 3 entre l'écrou 4 et l'épaulement 5. Sur la figure 1 on a représenté, en variante, les parties 1 et 2 écartées l'une de l'autre par une pièce d'entretoisement 6, représentée en trait interrompu seulement pour ménager la clarté de la figure. Il va de soi que la structure et le fonctionnement du dispositif suivant l'invention ne sont nullement affectés par la présence ou l'absence d'une telle pièce d'entretoisement, non plus que par les moyens utilisés pour mettre en tension la tige 3 qui pourraient être choisis, par l'homme de l'art, différents de l'écrou et de l'épaulement représentés.

Sur la figure 1 il apparaît que cette tige 3 est creusée axialement, sur une partie de sa longueur, d'un logement 7 en forme d'alésage étagé débouchant au centre de l'épaulement 5. L'extrémité borgne de ce logement est située au voisinage d'une gorge annulaire 8 délimitée dans la paroi de l'alésage par deux entailles annulaires 9 et 10, interne et externe respectivement. Comme représenté sur la figure 1, cette gorge est formée sur la tige 3 de manière à se trouver entre les parties assemblées par le dispositif suivant l'invention.

Un corps annulaire 11 est fixé dans le logement axial 7 pour recevoir et centrer dans cet alésage des moyens pyrotechniques (12, 13, 14 ,15) propres à provoquer la rupture de la tige 3 au niveau de la gorge 8, et donc la séparation des parties 1 et 2.

Conformément à la présente invention ces moyens pyrotechniques comprennent, montés coaxialement dans le corps 11, une capsule étanche 12 contenant une charge explosive 13 et des moyens d'initiation 14 de l'explosion de cette charge. Une partie d'écrou 15 solidaire de ces moyens d'initiation 14 permet de visser ceux-ci dans le corps 11 monté dans le logement axial 7. Un joint torique 16 assure l'étanchéité du vissage.

Les moyens d'initiation 14 peuvent être de tous types connus, électro- ou opto-pyrotechnique, à percussion d'une amorce, etc... Ils peuvent aussi être constitués par un relais d'une ligne pyrotechnique.

Les moyens d'initiation 14 peuvent former un angle quelconque entre 0 et 90° par rapport à l'axe de la capsule étanche 12.

Suivant une caractéristique de la présente invention, la capsule est réalisée en un matériau propre à subir des déformations du domaine plastique lors de l'explosion de la charge 13 sans que ces déformations ne provoquent la formation de criques, par exemple, susceptibles d'affecter son étanchéité.

A titre d'exemple illustratif et non limitatif, on pourra utiliser pour constituer cette capsule un métal déformable tel qu'un acier inoxydable d'une nuance convenablement choisie, du nickel ou un alliage de titane.

La capsule est assemblée de façon hermétique sur le corps 11.

Par commodité d'usinage, les pièces 11 et 12 peuvent constituer une seule et même pièce.

Comme cela apparaît sur les figures 1 et 2, la capsule 12 déborde d'une extrémité du corps 11 qui est opposée à celle sur laquelle sont montés les moyens d'initiation 14. Elle s'appuie alors sur une partie de paroi annulaire épaissie 3a du logement axial 7 située au-delà d'une partie de paroi annulaire 3b plus mince et plus écartée du fond du logement. Cette partie de paroi 3a est située en regard de la charge 13 contenue dans la capsule 12 et sa hauteur axiale H est avantageusement sensiblement égale au diamètre de cette charge. Par ailleurs l'extrémité distale 12a de cette capsule 12 et la gorge 8 sont sensiblement de niveau, à proximité du fond de l'alésage 7.

On va maintenant décrire le fonctionnement du dispositif suivant l'invention en liaison avec l'examen des figures 1 et 2 qui représentent l'état de ce dispositif avant et après l'explosion de la charge pyrotechnique 13, respectivement.

La détonation de la charge explosive 13 est commandée par l'émission d'un signal émis à un instant choisi par un système d'initiation (non représenté). Comme on l'a vu plus haut, ce signal peut être de divers types. Ce peut être, par exemple, un signal électrique, tel qu'un échelon de courant électrique, appliqué aux moyens d'initiation 14,15 pour y allumer une charge de poudre propre à son tour à faire détoner la charge explosive 13 contenue dans la capsule 12.

La figure 2 illustre l'effet de cette détonation sur la structure du dispositif suivant l'invention. La détonation provoque un gonflement radial de la capsule 12 qui transmet une onde de pression à la paroi annulaire du logement axial 7, par l'intermédiaire de la partie épaissie 3a de cette paroi avec laquelle elle est en contact. Les entailles annulaires 9 et 10 provoquent alors une concentration de contraintes dans la gorge 8 qui entraîne la rupture de la tige 3 au niveau de cette gorge et donc la séparation des parties 1 et 2. Ces contraintes sont pour l'essentiel des contraintes de cisaillement.

Le rapport des sections droites des parties de paroi annulaires 3a et 3b est choisi de manière à maximiser la déformation plastique de la partie 3b lors de l'explosion de la charge 13 et donc à maintenir les génératrices de la partie 3a aussi droites que possible. Ce rapport dépend de la puissance de la charge 13, de la géométrie de la tige 3 et des caractéristiques mécaniques du matériau, métallique de préférence, constituant la tige 3.

C'est ainsi que, lors de l'explosion de la charge 13, la tige 3 se gonfle faiblement au niveau de la capsule 12 et de la gorge 8 dont la résistance à la rupture est affaiblie par les entailles annulaires 9 et 10. La tige 3 se sectionne alors au niveau de cette gorge et prend une forme tronconique à faible conicité s'ouvrant vers la section. Celle-ci est de forme sensiblement plane ou très légèrement conique. Le sectionnement s'opère sans projection de débris issus de la section.

La ductilité du métal choisi pour réaliser la capsule 12 permet à celle-ci de subir des déformations importantes sans se rompre. Ceci assure le confinement dans cette capsule des produits de la détonation de la charge 13, en combinaison avec la jonction étanche établie entre le corps 11 et les moyens d'initiation 14.

On empêche également la dispersion dans l'environnement de pièces formant partie du dispositif suivant l'invention, après la rupture de celui-ci, en disposant des moyens de retenue ou de piégeage de ces pièces sur l'une ou l'autre des parties 1 et 2 séparées. Ces moyens peuvent être choisis par l'homme de l'art parmi nombre de tels moyens bien connus : organes de fixation divers tels que vis, points de collage ou de soudure, enrobage, pattes de retenue comme schématisé en trait interrompu en 17 sur la figure 2, etc....

Il apparaît donc que la rupture du dispositif suivant l'invention n'entraîne aucune dispersion de débris ou de pièces dans l'environnement, conformément à l'un des buts de la présente invention. Ce dispositif est par conséquent bien adapté à une utilisation dans l'environnement d'un satellite artificiel pour les raisons développées en préambule de la présente description.

On observera aussi que la rupture de ce dispositif est provoquée par un faible gonflement radial de la capsule 12. Ce faible gonflement, associé à une symétrie axiale de la partie fonctionnelle du dispositif (explosif 13, capsule 12 et structure 5) permet de minimiser le niveau de choc qui en résulte pour les parties séparées, conformément à un autre but de la présente invention.

Ce gonflement radial s'accompagne d'un gonflement axial de l'extrémité distale 12a de la capsule, comme représenté sur la figure 2. On peut faire en sorte que cette extrémité vienne alors porter sur le fond adjacent du logement axial 7 pour aider à l'écartement des deux parties à séparer. La poussée axiale développée ne participe pas à la rupture de la tige 3, qui résulte des contraintes de cisaillement évoquées plus haut. Par contre cette poussée axiale peut être exploitée pour activer des dispositifs annexes au dispositif suivant l'invention, ou participer à l'éloignement des parties séparées.

On remarquera encore que les moyens pyrotechniques (12, 13, 14, 15) du dispositif suivant l'invention peuvent avantageusement être montés dans le logement axial 7 de la tige 3 après assemblage des parties 1 et 2 à l'aide de cette tige. Cette disposition est particulièrement intéressante pour l'intégration mécanique du dispositif qui peut être effectuée sans contraintes réglementaires vis-à-vis de la pyrotechnie, celle-ci étant mise en place en final.

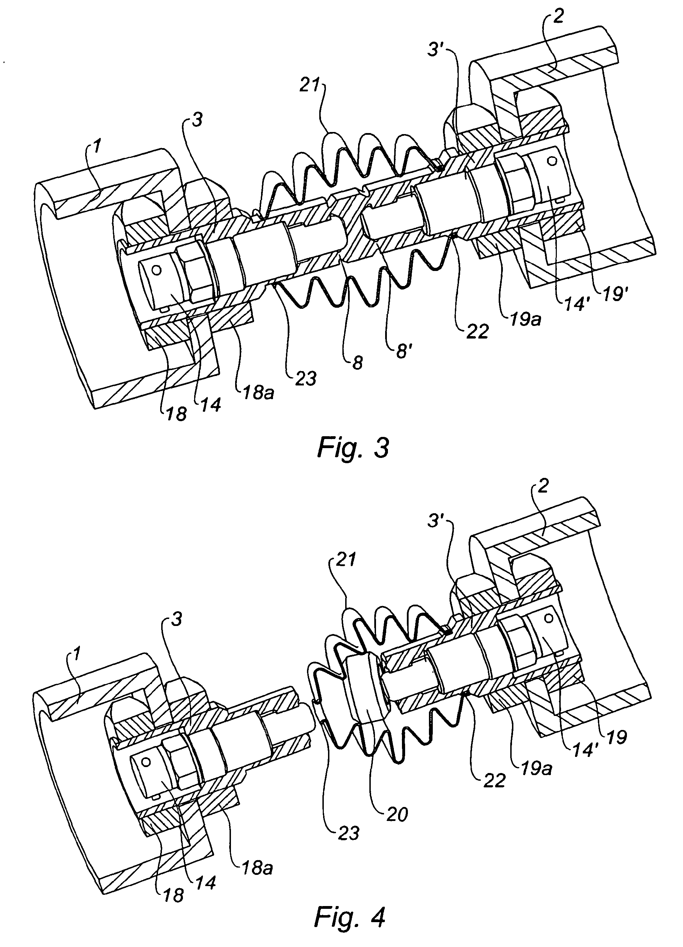

On se réfère maintenant aux figures 3 et 4 du dessin annexé où l'on a représenté un deuxième mode de réalisation de ce dispositif. Sur ces figures, des références numériques, éventuellement affectées d'un "prime", repèrent des éléments ou organes analogues à ceux portant la même référence sur les figures 1 et 2.

Le dispositif des figures 3 et 4 est conçu de manière à accroître la fiabilité de la rupture, au moment où celle-ci est commandée. Pour ce faire on dispose coaxialement, tête-bêche, deux dispositifs sensiblement conformes à celui représenté aux figures 1 et 2, solidarisés par les extrémités alors en regard de leurs tiges respectives 3, 3' comme représenté à la figure 3. La tige unique qui en résulte présente alors deux gorges 8, 8' distantes axialement l'une de l'autre. Aux extrémités opposées de cette tige unique sont fixées les parties mécaniques 1 et 2 à assembler, qui prennent localement la forme de cuvettes dans le mode de réalisation représenté aux figures 3 et 4, donné à titre d'exemple illustratif et non limitatif seulement. Chacune de ces cuvettes est assemblée à l'extrémité correspondante de la tige unique 3, 3' par serrage entre deux écrous 18, 18a et 19, 19a respectivement.

On comprend que l'activation de l'un ou l'autre des deux moyens d'initiation 14, 14' suffit normalement à assurer la séparation des parties 1 et 2. L'activation simultanée des deux moyens accroît donc, par effet de redondance, la fiabilité de la séparation. On sait l'importance de cette fiabilité dans toutes les activités du domaine spatial.

Pour éviter qu'un segment 20 de la tige commune délimité par les gorges 8 et 8' ne soit libéré dans l'environnement après la rupture du dispositif, on équipe ce dispositif de moyens de retenue de ce segment. Comme représenté aux figures 3 et 4, ces moyens peuvent prendre la forme d'un soufflet 21 solidaire, par une extrémité 22, d'une des parties assemblées (la partie 2 dans le mode de réalisation représenté). Avant rupture le soufflet enveloppe la partie centrale de la tige unique 3,3', comme représenté à la figure 3. Après rupture l'autre extrémité 23 du soufflet 21 se dégage du morceau de tige 3 resté solidaire de l'autre partie 1 et se rétracte pour piéger le segment de tige 20.

## Revendications

1. Dispositif d'assemblage à rupture pyrotechnique conçu pour assembler temporairement au moins deux parties mécaniques (1, 2), du type comprenant une tige (3) présentant un axe et dimensionnée pour traverser lesdites parties (1,2) suivant cet axe, des moyens (4,5) coopérant avec ladite tige (3) pour contraindre axialement lesdites parties (1,2) entre les extrémités de ladite tige (3), au moins une gorge annulaire frangible (8) formée sur ladite tige (3) et des moyens pyrotechniques (12,13.14,15) pour briser sélectivement ladite tige (3) au niveau de ladite gorge (8) et libérer ainsi lesdites parties (1,2) dudit assemblage, le dispositif comprenant des moyens de confinement de produits issus d'une détonation dans ladite tige, lesdits moyens de confinement étant réalisés en un matériau propre à subir des déformations du domaine plastique sans effet sur son étanchéité lors de l'explosion d'une charge (13) **caractérisé en ce que** lesdits moyens de confinement comprennent une capsule étanche déformable (12) insérée dans un logement radial (7) de ladite tige (3), et **en ce que** ladite capsule étanche (12) contient ladite charge explosive (13) disposée à proximité de ladite gorge (8) pour transmettre à ladite tige (3) des contraintes propres à assurer la rupture de celle-ci au niveau de ladite gorge (8).

2. Dispositif conforme à la revendication 1, **caractérisé en ce que** ladite capsule (12) est réalisée en un métal déformable.

3. Dispositif conforme à la revendication 1 ou 2, **caractérisé en ce qu'**il comprend un corps (11) de forme généralement annulaire conçu pour être reçu dans ledit logement axial (7), ladite capsule (12) débordant d'une extrémité dudit corps (11) alors que des moyens d'initiation (14) de l'explosion de ladite charge (13) sont montés sur l'autre extrémité dudit corps (11).

4. Dispositif conforme à l'une quelconque des revendications 1 à 3, **caractérisé en ce que** ladite gorge (8) est disposée sur ladite tige (3) sensiblement en regard de l'extrémité distale (12a) de ladite capsule (12).

5. Dispositif conforme à la revendication 4, **caractérisé en ce que** ledit logement axial (7) présente une partie de paroi annulaire épaissie (3a) enserrant ladite capsule (12) au niveau de la partie de celle-ci qui contient ladite charge (13).

6. Dispositif conforme à la revendication 5, **caractérisé en ce que** ladite partie de paroi épaissie (3a) présente une dimension axiale (H) de l'ordre du diamètre de ladite charge (13).

7. Dispositif conforme à la revendication 6, **caractérisé en ce que** ledit logement axial (7) présente une partie de paroi annulaire (3b) plus écartée du fond dudit logement que ladite partie épaissie (3a), ladite partie (3b) plus écartée étant dimensionnée pour subir une déformation plastique lors de l'explosion de ladite charge (13), ladite tige (3) se coupant alors au niveau de ladite gorge (8) sous l'effet de contraintes de cisaillement concentrées à ce niveau.

8. Dispositif conforme à l'une quelconque des revendications 4 à 7, **caractérisé en ce que** ladite gorge (8) est située à proximité du fond dudit logement axial (7) et **en ce que** l'extrémité distale de ladite capsule (12) se gonfle lors de l'explosion de ladite charge (13) et peut venir porter alors contre ledit fond pour réaliser des fonctions supplémentaires.

9. Dispositif conforme à l'une quelconque des revendications 1 à 8, **caractérisé en ce qu'**il comprend des moyens de retenue (17), sur l'une ou l'autre desdites parties mécaniques (1, 2), des pièces dudit dispositif séparées par l'explosion de ladite charge (13).

10. Dispositif conforme à l'une quelconque des revendications précédentes, **caractérisé en ce qu'**il comprend une deuxième gorge annulaire frangible (8') formée sur une deuxième tige (3') coaxiale à la première tige (3) et solidaire de celle-ci de manière à former une tige unique (3.3') d'assemblage desdites parties **(1,2),** et des deuxième moyens pyrotechniques identiques auxdits moyens pyrotechniques (12,13,14,15) et disposés dans ladite deuxième tige (3') comme lesdits moyens (12,13,14,15) le sont dans ladite tige (3), pour briser sélectivement ladite deuxième tige (3') au niveau de ladite deuxième gorge (8').

11. Dispositif conforme à la revendication 10, **caractérisé en ce qu'**il comprend des moyens de retenue (21), sur l'une desdites parties mécaniques (1,2) après la séparation de celles-ci, d'une partie (20) de tige commune auxdites tiges (3,3') délimitée par les deux gorgea (8,8').

12. Dispositif conforme à la revendication 10, **caractérisé en ce que** lesdits moyens de retenue de ladite partie (20) de tige commune sont constitués par un soufflet rétractable (21) solidaire de l'une desdites parties mécaniques.

## Claims

1. Assembly device comprising pyrotechnical rupture means which is designed for assembling temporarily at least two mechanical parts (1, 2) of the type comprising a rod (3) which has an axis and is dimensioned to pass through said parts (1, 2) along this axis, means (4, 5) which cooperate with said rod (3) in order to constrain said parts (1, 2) axially between the ends of said rod (3), at least one frangible annular groove (8) which is formed on said rod (3), and pyrotechnical means (12, 13, 14, 15) for breaking said rod (3) selectively at the level of said groove (8) and thus freeing said parts (1, 2) of said assembly, the device comprising means for confining products which are the result of a detonation in said rod, said confinement means being made of a material which is able to undergo deformations in the plastic range without an effect on its seal during the explosion of a charge (13), **characterised in that** said confinement means comprise a deformable sealing capsule (12) which is inserted into a radial housing (7) of said rod (3), and **in that** said sealing capsule (12) contains said explosive charge (13) disposed in the vicinity of said groove (8) in order to transmit to said rod (3) stresses which are able to ensure the rupture of the latter at the level of said groove (8).

2. Device according to claim 1, **characterised in that** said capsule (12) is made of a deformable metal.

3. Device according to claim 1 or 2, **characterised in that** it comprises a body (11) of a generally annular shape which is designed to be received in said axial housing (7), said capsule (12) projecting from one end of said body (11) when the initiation means (14) for the explosion of said charge (13) are mounted on the other end of said body (11).

4. Device according to any of the claims 1 to 3, **characterised in that** said groove (8) is disposed on said rod (3) approximately opposite the distal end (12a) of said capsule (12).

5. Device according to claim 4, **characterised in that** said axial housing (7) has a thickened part (3a) of the annular wall which encircles said capsule (12) at the level of the part of the latter which contains said charge (13).

6. Device according to claim 5, **characterised in that** said thickened part (3a) of the wall has an axial dimension (H) of the order of the diameter of said charge (13).

7. Device according to claim 6, **characterised in that** said axial housing (7) has a part (3b) of the annular wall which is at a greater spacing from the base of said housing than said thickened part (3a), said part (3b) which is at a greater spacing being dimensioned in order to undergo a plastic deformation during the explosion of said charge (13), said rod (3) then being cut at the level of said groove (8) under the effect of shear stresses which are concentrated at this level.

8. Device according to any of the claims 4 to 7, **characterised in that** said groove (8) is situated in the vicinity of the base of said axial housing (7), and **in that** the distal end of said capsule (12) is inflated during the explosion of said charge (13) and can then come to abut against said base in order to perform supplementary functions.

9. Device according to any of the claims 1 to 8, **characterised in that** it comprises retention means (17), on one or the other of said mechanical parts (1, 2), for the pieces of said device which are separated by the explosion of said charge (13).

10. Device according to any of the preceding claims, **characterised in that** it comprises a second frangible annular groove (8') which is formed on a second rod (3') which is coaxial to the first rod (3) and integral with the latter so as to form a single rod (3, 3') for assembling said parts (1, 2), and second pyrotechnical means which are identical to said pyrotechnical means (12, 13, 14, 15) and are disposed in said second rod (3'), as are said means (12, 13, 14, 15) in said rod (3), in order to break selectively said second rod (3') at the level of said second groove (8').

11. Device according to claim 10, **characterised in that** it comprises retention means (21), on one of said mechanical parts (1, 2) after separation of the latter, for a part (20) of the rod which is common to said rods (3, 3) and delimited by the two grooves (8, 8').

12. Device according to claim 10, **characterised in that** said means for retaining said part (20) of the common rod are formed by retractable bellows (21) which are integral with one of said mechanical parts.

## Patentansprüche

1. Pyrotechnisch trennbare Verbindungsvorrichtung zur vorübergehenden Verbindung mindestens zweier mechanischer Teile (1, 2) von dem Typ, der eine Stange (3) umfasst, die eine Achse aufweist und dafür bemessen ist, die genannten Teile (1, 2) entlang dieser Achse zu durchqueren, Mittel (4, 5), die mit der genannten Stange (3) zusammenwirken, um die genannten Teile (1, 2) in Achsenrichtung zwischen den Enden der genannten Stange (3) zusammenzudrücken, mindestens eine an der genannten Stange (3) ausgebildete trennbare Ringnut (8) und pyrotechnische Mittel (12, 13, 14, 15), um die genannte Stange (3) in Höhe der genannten Nut (8) wahlweise zu sprengen und dadurch die genannten Teile (1, 2) der genannten Verbindung freizusetzen, wobei die Vorrichtung Einschließungsmittel für die Produkte einer Explosion in der genannten Stange umfasst, wobei die genannten Einschließungsmittel aus einem Werkstoff bestehen, der in der Lage ist, bei der Explosion einer Ladung (13) Verformungen im plastischen Bereich ohne Auswirkungen auf seine Dichtigkeit zu erleiden, **dadurch gekennzeichnet, dass** die genannten Einschließungsmittel eine verformbare, dichte Kapsel (12) umfassen, die in eine radiale Aufnahme (7) der genannten Stange (3) eingefügt ist, und dadurch, dass die genannte dichte Kapsel (12) die genannte Sprengladung (13) enthält, die in der Nähe der genannten Nut (8) angeordnet ist, um die genannte Stange (3) Belastungen auszusetzen, die geeignet sind, deren Trennung in Höhe der genannten Nut (8) sicherzustellen.

2. Vorrichtung nach Patentanspruch 1, **dadurch gekennzeichnet, dass** die genannte Kapsel (12) aus einem verformbaren Metall besteht.

3. Vorrichtung nach Patentanspruch 1 oder 2, **dadurch gekennzeichnet, dass** sie einen Körper (11) der allgemeinen Form eines Ringes umfasst, dafür entworfen, in der genannten axialen Aufnahme (7) aufgenommen zu werden, wobei die genannte Kapsel (12) über ein Ende des genannten Körpers (11) hinausragt, während Auslösungsmittel (14) der Explosion der genannten Ladung (13) am anderen Ende des genannten Körpers (11) montiert sind.

4. Vorrichtung nach irgendeinem der Patentansprüche 1 bis 3, **dadurch gekennzeichnet, dass** die genannte Nut (8) auf der genannten Stange (3)im Wesentlichen dem entfernten Ende (12a) der genannten Kapsel (12) gegenüber angeordnet ist.

5. Vorrichtung nach Patentanspruch 4, **dadurch gekennzeichnet, dass** die genannte axiale Aufnahme (7) einen verdickten, ringförmigen Wandbereich (3a) aufweist, der die genannte Kapsel (12) in Höhe von deren Bereich, der die genannte Ladung (13) enthält, einschließt.

6. Vorrichtung nach Patentanspruch 5, **dadurch gekennzeichnet, dass** der genannte verdickte Wandbereich (3a) eine axiale Abmessung (H) in der Größenordnung des Durchmessers der genannten Ladung (13) aufweist.

7. Vorrichtung nach Patentanspruch 6, **dadurch gekennzeichnet, dass** die genannte axiale Aufnahme (7) einen ringförmigen Wandbereich (3b) aufweist, der vom Boden der genannten Aufnahme weiter entfernt ist, als der genannte verdickte Bereich (3a), wobei der genannte weiter entfernte Bereich (3b) dafür bemessen ist, bei der Explosion der genannten Ladung (13) eine plastische Verformung zu erfahren, wobei dann die genannte Stange (3) in Höhe der genannten Nut (8) unter der Wirkung von Scherkräften getrennt wird, die an dieser Stelle konzentriert sind.

8. Vorrichtung nach irgendeinem der Patentansprüche 4 bis 7, **dadurch gekennzeichnet, dass** die genannte Nut (8) in der Nähe des Bodens der genannten axialen Aufnahme (7) angeordnet ist und dadurch, dass sich das entfernte Ende der genannten Kapsel (12) bei der Explosion der genannten Ladung (13) aufbläht und sich also an den genannten Boden anlegen kann, um weitere Funktionen zu erfüllen.

9. Vorrichtung nach irgendeinem der Patentansprüche 1 bis 8, **dadurch gekennzeichnet, dass** sie an dem einen oder anderen der genannten mechanischen Teile (1, 2) Rückhaltemittel (17) für die Teile der genannten, durch die Explosion der genannten Ladung (13) getrennten Vorrichtung umfasst.

10. Vorrichtung nach irgendeinem der vorangehenden Patentansprüche, **dadurch gekennzeichnet, dass** sie eine zweite trennbare Ringnut (8') umfasst, die auf einer zweiten, zur ersten Stange (3) koaxialen und mit dieser derart, dass sie eine einzige Stange (3, 3') zur Verbindung der genannten Teile (1, 2) bildet, fest verbundenen Stange (3') ausgebildet ist, und zweite pyrotechnische Mittel, die zu den genannten pyrotechnischen Mitteln (12, 13, 14, 15) identisch und in der genannten zweiten Stange (3') angeordnet sind, wie es die genannten Mittel (12, 13, 14, 15) in der genannten Stange (3) sind, um wahlweise die genannte zweite Stange (3') in Höhe der genannten zweiten Nut (8') zu trennen.

11. Vorrichtung nach Patentanspruch 10, **dadurch gekennzeichnet, dass** sie an dem einen der genannten mechanischen Teile (1, 2) Rückhaltemittel (21) für einen Stangenteil (20), der den genannten Stangen (3, 3') gemeinsam ist und durch die beiden Nuten (8, 8') begrenzt ist, nach der Trennung der mechanischen Teile umfasst.

12. Vorrichtung nach Patentanspruch 10, **dadurch gekennzeichnet, dass** die genannten Rückhaltemittel für den genannten gemeinsamen Stangenteil (20) aus einem einziehbaren Balg (21) bestehen, der mit dem einen der genannten mechanischen Teile fest verbunden ist.
